# EUROPÄISCHE PATENTSCHRIFT

(11) **EP 4 609 489 B1**
(45) Veröffentlichungstag und Bekanntmachung des Hinweises auf die Patenterteilung: **26.08.2026**
(21) Anmeldenummer: 23785765.1
(22) Anmeldetag: 04.10.2023
(51) Int. Cl.: H02K 1/20, H02K 3/24, H02K 3/487, H02K 9/197

(54) **STATOR FÜR EINE ELEKTRISCHE MASCHINE**
STATOR FOR AN ELECTRIC MACHINE
STATOR POUR UNE MACHINE ÉLECTRIQUE

(30) Priorität: 28.10.2022 DE 102022211492
(43) Veröffentlichungstag der Anmeldung: 03.09.2025
(73) Patentinhaber: Robert Bosch GmbH, 70442 Stuttgart (DE)
(72) Erfinder: HERZBERGER, Andreas, 71686 Remseck Am Neckar (DE); BENSING, Felix, 70437 Stuttgart (DE); STAMMLER, Jannik, 70197 Stuttgart (DE); JAEGER, Lea, 30982 Pattensen (DE); OETTING, Claus-Christian, 87544 Blaichach (DE)
(86) Internationale Anmeldenummer: PCT/EP2023/077387
(87) Internationale Veröffentlichungsnummer: WO 2024/088713

(56) Entgegenhaltungen:
- CN-A- 114 337 015
- DE-A1- 102011 008 769
- DE-B4- 102020 117 267

## Beschreibung

### Stand der Technik

Die Erfindung geht aus von einem Stator nach der Gattung des Hauptanspruchs.

Es ist schon ein Stator einer elektrischen Maschine aus der DE102020126408 A1 und der DE102020119110 A1 bekannt, mit einer Statorachse und einem Statorblechpaket, an dem Statorzähne und zwischen den Statorzähnen liegende Statornuten ausgebildet sind und das eine Vielzahl von Blechlamellen umfasst, wobei in den Statornuten jeweils ein einziger Leiter oder ein mehrere Leiter umfassendes Leiterbündel, insbesondere ein Stapel von Flachdrahtleitern, zur Bildung einer elektrischen Statorwicklung vorgesehen ist, wobei zwischen Flanken der jeweiligen Statornut und dem in der Statornut angeordneten Leiter bzw. Leiterbündel Nutspalte gebildet sind, die in der jeweiligen Statornut einen sich in axialer Richtung bezüglich der Statorachse erstreckenden Nutspaltkanal bilden, der entlang eines Nut-Kühlpfads von einem Kühlmedium, insbesondere Öl, durchströmbar ist, wobei sich die Statornuten in radialer Richtung bezüglich der Statorachse jeweils zwischen einem Nutgrund und einem Nutschlitz erstrecken, wobei die Nutschlitze der Statornuten durch einen als Statordichthülse ausgebildeten Nutverschluss verschlossen sind, wobei die Statordichthülse auf einer dem Statorblechpaket zugewandten Außenseite Radialvorsprünge aufweist, die in radialer Richtung in die Nutschlitze hineinreichen und sich in axialer Richtung erstrecken. Die Statordichthülse weist Versteifungsrippen zum Aufpressen der Statordichthülse auf den Innendurchmesser des Stators auf. Die Versteifungsrippen sind in axialer Richtung durchgehend ausgebildet. Das Dokument DE 10 2020 117267 B4 offenbart einen Stator für eine elektrische Maschine mit den Merkmalen des Oberbegriffs des Anspruchs 1.

### Vorteile der Erfindung

Der erfindungsgemäße Stator mit den kennzeichnenden Merkmalen des Hauptanspruchs hat demgegenüber den Vorteil, dass die Statordichthülse zur Einstellung eines mäanderförmigen Nut-Kühlpfades beiträgt und aufgrund der verbesserten Strömungsführung die Kühlung des Stators verbessert. Insbesondere wird das Leiterbündel im jeweiligen Nutspaltkanal entlang des Kühlpfades gleichmäßiger gekühlt.

Dies wird erfindungsgemäß erreicht, indem
- die Radialvorsprünge der Statordichthülse Nutschlitz-Versperrungen sind, die den jeweiligen Nutschlitz abschnittsweise für den Nut-Kühlpfad versperren oder verengen und
- an der Statordichthülse pro Nutschlitz des Stators mehrere in axialer Richtung bezüglich der Statorachse voneinander beabstandete Nutschlitz-Versperrungen ausgebildet sind, die insbesondere bis an den Leiter bzw. das Leiterbündel reichen,
- zwischen benachbarten der Nutschlitz-Versperrungen desselben Nutschlitzes jeweils ein Nutschlitz-Durchlass für eine Umlenkung des Nut-Kühlpfades gebildet ist
- die Nutschlitz-Versperrungen der Statordichthülse sickenförmig ausgebildet sind.

Die sickenförmigen Nutschlitz-Versperrungen ermöglichen eine kostengünstige Herstellung der erfindungsgemäßen Statordichthülse.

Durch die in den Unteransprüchen aufgeführten Maßnahmen sind vorteilhafte Weiterbildungen und Verbesserungen des im Hauptanspruch angegebenen Stators für eine elektrische Maschine möglich.

Gemäß einer vorteilhaften Ausführung können die Nutschlitz-Durchlässe der Statordichthülse als Sicken-Unterbrechung oder als Sicke mit verminderter Sickenhöhe ausgebildet sein.

Besonders vorteilhaft ist, wenn die Statordichthülse pro Nutschlitz ein Versperrungs-Muster umfassend zumindest eine Nutschlitz-Versperrung und zumindest einen Nutschlitz-Durchlass aufweist, wobei für einen ersten Satz von Nutschlitzen ein erstes Versperrungs-Muster und für einen zweiten Satz von Nutschlitzen ein zweites Versperrungs-Muster vorgesehen ist, wobei das zweite Versperrungs-Muster an axialen Positionen, an denen das erste Versperrungs-Muster einen Nutschlitz-Durchlass aufweist, eine Nutschlitz-Versperrung hat, wobei die Nutschlitz-Versperrungen von beiden Versperrungs-Mustern in axialer Richtung gesehen insbesondere überlappen. Auf diese Weise sind die Bypässe in einem ersten Satz von Statornuten gegenüber einem zweiten Satz von Statornuten radial gegensätzlich angeordnet , so dass die mäanderförmigen Nut-Kühlpfade in dem ersten Satz von Statornuten gegenüber dem zweiten Satz von Statornuten radial gegensätzlich verlaufen. An axialen Positionen, an denen im ersten Satz von Statornuten ein Bypass im Nutgrund ausgebildet ist, ist also im zweiten Satz von Statornuten ein Bypass im Nutschlitz vorgesehen.

Weiterhin vorteilhaft ist, wenn in den Statornuten jeweils mehrere, in axialer Richtung bezüglich der Statorachse voneinander beabstandete Stützstellen zur Abstützung des in der jeweiligen Statornut liegenden Leiters bzw. Leiterbündels gebildet sind, wobei der jeweilige Nut-Kühlpfad an den Stützstellen zumindest verengt ist, wobei an den Stützstellen jeweils ein Bypass vorgesehen ist, um das Kühlmedium an der jeweiligen verengten Stützstelle vorbeizuleiten, wobei die Bypässe der jeweiligen Statornut zur Bildung eines mäanderförmigen Nut-Kühlpfads entlang der axialen Erstreckung der jeweiligen Statornut abwechselnd am Nutgrund oder im Nutschlitz ausgebildet sind, wobei der Bypass im Nutschlitz als Nutschlitz-Durchlass an der Statordichthülse vorgesehen ist. Auf diese Weise sind die Nutspaltkanäle durchgängig durchströmbar, wobei die im Nutschlitz liegenden Bypässe als Nutschlitz-Durchlass an der Statordichthülse ausgebildet sind. Zwischen den Stützstellen sind in den Nutschlitzen Nutschlitz-Versperrungen ausgebildet, um eine für die Kühlung nachteilige geradlinige Strömung durch den Nutschlitz zu vermeiden.

Sehr vorteilhaft ist es, wenn die Stützstellen gebildet sind durch Verdrehen von jeweils zumindest zwei Blechlamellen des Statorblechpakets um einen bestimmten Verdrehwinkel um die Statorachse. Auf diese Weise können die Stützstellen besonders einfach hergestellt werden. Insbesondere erfordert diese Lösung keine Sonderlamellen im Statorblechpaket.

Auch vorteilhaft ist, wenn die Statordichthülse durch Umformen, insbesondere Warmumformen, fest mit dem Stator verbunden ist, insbesondere indem Material der Statordichthülse in die Nutschlitze hinein verdrängt ist. Auf diese Weise kann eine sehr dünne Statordichthülse erreicht werden, die den Luftspalt der elektrischen Maschine nur geringfügig vergrößert, so dass weiterhin eine hohe Leistung der elektrischen Maschine erzielt werden kann. Außerdem wird die Abdichtung der Nutschlitze durch die Materialverdrängung verbessert.

Desweiteren vorteilhaft ist, wenn die Statordichthülse aus einem Werkstoff hergestellt ist, der einen Thermoplast umfasst, insbesondere einen thermoplastischen Verbundwerkstoff, speziell insbesondere einen faserverstärkten Verbundwerkstoff. Auf diese Weise wird die Herstellung der Statordichthülse durch ein Warmumformen ermöglicht.

Darüber hinaus vorteilhaft ist, wenn die Statordichthülse aus einem umzuformenden Rohling hergestellt ist, wobei der Rohling ein Glattrohr, insbesondere eine extrudierte Hülse, ist, das mit Fügeluft an das Statorblechpaket montiert und nachträglich aufgeweitet ist. Alternativ kann der Rohling ein Flachmaterialstreifen sein, insbesondere aus einem Organoblech, der zur Erreichung der Hülsenform an luftspaltzugewandte Umfangsseiten der Statorzähne angeformt ist, insbesondere mit Überlappung der beiden Enden des Flachmaterialstreifens, und im Bereich der Nutschlitze in die Nutschlitze des Statorblechpakets hinein geformt ist, insbesondere durch Rollieren. Auf diese Weise wird eine kostengünstige Herstellung der Statordichthülse für eine Großserienfertigung erreicht.

Weiterhin betrifft die Erfindung ein Verfahren zur Ausbildung einer Statordichthülse an einem Stator für eine elektrische Maschine, wobei das Verfahren die folgenden Schritte umfasst:
a. Bereitstellen eines fertigen Stators umfassend ein Statorblechpaket und eine Statorwicklung,
b. Anordnen eines Rohlings zur Erzeugung einer Statordichthülse entlang von luftspaltzugewandten Umfangsseiten der Statorzähne des Statorblechpakets,
c. Erzeugen der Statordichthülse durch Umformen, insbesondere Warmumformen, des Rohlings, insbesondere durch Rollieren oder Aufweiten, mittels zumindest eines Umformwerkzeuges derart, dass sich der Rohling an die luftspaltzugewandten Umfangsseiten der Statorzähne anlegt, insbesondere derart, dass Material des Rohlings in die Nutschlitze hinein verdrängt wird,
d. Erzeugen von Sicken in der Statordichthülse zur Bildung der Nutschlitz-Versperrungen.

Das Verfahren hat den Vorteil, dass ein Einpressen der Statordichthülse entfällt. Die Statordichthülse muss dadurch keine hohe Steifigkeit zum Ermöglichen des Einpressens aufweisen. Stattdessen wird ein Rohling durch Umformen fest an den Stator angeformt.

Außerdem betrifft die Erfindung eine elektrische Maschine mit einem erfindungsgemäßen Stator.

### Zeichnung

Ein Ausführungsbeispiel der Erfindung ist in der Zeichnung vereinfacht dargestellt und in der nachfolgenden Beschreibung näher erläutert.

Es zeigen:
- Fig.1: im Schnitt eine elektrische Maschine mit einem erfindungsgemäßen Stator und einem Rotor,
- Fig.2: einen Schnitt durch eine der Statornuten des Stators entlang einer Linie A-A in Fig.1,
- Fig.3: einen Schnitt durch eine der Statornuten des Stators entlang einer Linie B-B in Fig.1,
- Fig.4: einen Schnitt durch eine der Statornuten des Stators entlang einer Linie C-C in Fig.1 und
- Fig.5: eine Schnittansicht auf einen Innenumfang des Stators nach Fig.1 mit der am Innenumfang anliegenden erfindungsgemäßen Statordichthülse.

### Beschreibung des Ausführungsbeispiels

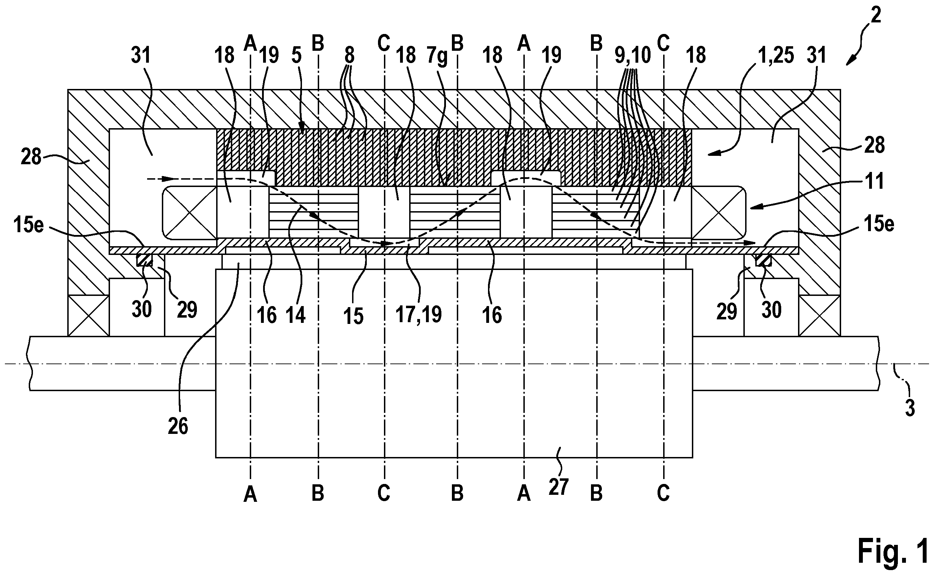

Fig.1 zeigt im Schnitt eine elektrische Maschine mit einem erfindungsgemäßen Stator und einem Rotor.

Der Stator 1 der elektrischen Maschine 2 hat eine Statorachse 3 und umfasst ein Statorblechpaket 5, an dem Statorzähne 6 und zwischen den Statorzähnen 6 liegende Statornuten 7 ausgebildet sind und das eine Vielzahl von Blechlamellen 8 umfasst. In den Statornuten 7 ist jeweils ein einziger elektrischer Leiter 9 oder ein mehrere Leiter 9 umfassendes Leiterbündel 10, insbesondere ein Stapel von Flachdrahtleitern, zur Bildung einer elektrischen Statorwicklung 11 vorgesehen. Der einzelne elektrische Leiter 9 ist beispielsweise ein Lackdraht. Zwischen den Flanken 7f der jeweiligen Statornut 7 und dem in der Statornut 7 angeordneten Leiter 9 bzw. Leiterbündel 10 sind Nutspalte 12 gebildet, die in der jeweiligen Statornut 7 einen sich in axialer Richtung bezüglich der Statorachse 3 erstreckenden Nutspaltkanal 13 bilden, der entlang eines Nut-Kühlpfads 14 von einem Kühlmedium, insbesondere Öl, durchströmbar und insbesondere beidseitig des Leiters 9 bzw. Leiterbündels 10 ausgebildet ist. Die Statornuten 7 erstrecken sich in radialer Richtung bezüglich der Statorachse 3 jeweils zwischen einem Nutgrund 7g und einem Nutschlitz 7s. Die Nutschlitze 7s der Statornuten 7 sind durch einen hülsenförmigen Nutverschluss verschlossen, der an luftspaltzugewandten Umfangsseiten der Statorzähne 6 anliegt und im folgenden als Statordichthülse 15 bezeichnet wird. Die Statordichthülse 15 weist auf einer dem Statorblechpaket 5 zugewandten Außenseite Radialvorsprünge 16 auf, die in radialer Richtung in die Nutschlitze 7s hineinreichen und sich in axialer Richtung erstrecken.

Erfindungsgemäß ist vorgesehen, dass die Radialvorsprünge 16 der Statordichthülse 15 Nutschlitz-Versperrungen 16 sind, die den jeweiligen Nutschlitz 7s abschnittsweise für den Nut-Kühlpfad 14 versperren oder verengen, wobei an der Statordichthülse 15 pro Nutschlitz 7s des Stators 1 mehrere in axialer Richtung bezüglich der Statorachse 3 voneinander beabstandete Nutschlitz-Versperrungen 16 ausgebildet sind, die insbesondere bis an den Leiter 9 bzw. das Leiterbündel 10 reichen. Dabei ist zwischen benachbarten der Nutschlitz-Versperrungen 16 desselben Nutschlitzes 7s jeweils ein Nutschlitz-Durchlass 17 für eine Umlenkung des Nut-Kühlpfades 14 zurück in Richtung Nutgrund 7g gebildet. Die Nutschlitz-Versperrungen 16 der Statordichthülse 15 dienen also der Strömungsführung des Nut-Kühlpfads 14. Für den Nut-Kühlpfad 14 ist insbesondere ein mäanderförmiger Verlauf vorgesehen.

In den Statornuten 7 sind beispielsweise jeweils mehrere, in axialer Richtung bezüglich der Statorachse 3 voneinander beabstandete Stützstellen 18 zur Abstützung des in der jeweiligen Statornut 7 liegenden Leiters 9 bzw. Leiterbündels 10 gebildet. Der jeweilige Nut-Kühlpfad 14 ist an den Stützstellen 18 zumindest verengt. Daher ist an den Stützstellen 18 jeweils ein Bypass 19 vorgesehen, um das Kühlmedium an der jeweiligen verengten Stützstelle 18 vorbeizuleiten. Die Bypässe 19 der jeweiligen Statornut 7 sind zur Bildung des mäanderförmigen Nut-Kühlpfads 14 entlang der axialen Erstreckung der jeweiligen Statornut 7 abwechselnd am Nutgrund 7g oder im Nutschlitz 7s ausgebildet, wobei der Bypass 19 im Nutschlitz 7s als Nutschlitz-Durchlass 17 an der Statordichthülse 15 ausgeführt ist.

Die Bypässe 19 sind nach Fig.1 beispielsweise von einer der Stützstellen 18 zur jeweils nächsten Stützstelle 18 abwechselnd am Nutgrund 7g oder im Nutschlitz 7s ausgebildet.

Die Stützstellen 18 können beispielsweise gebildet sein durch Verdrehen von jeweils zumindest zwei Blechlamellen 8 des Statorblechpakets 5 um einen bestimmten Verdrehwinkel um die Statorachse 3.

Die Statordichthülse 15 ragt in axialer Richtung mit Hülsen-Endabschnitten 15e über beide Stirnseiten des Statorblechpakets 5 hinaus, wobei die Wandstärke der Hülsen-Endabschnitte 15e beispielsweise größer ausgebildet ist als die minimale Wandstärke in einem Zwischenabschnitt der Statordichthülse 15 zwischen den Hülsen-Endabschnitten 15e.

Die elektrische Maschine 2 umfasst einen Statorraum 25 zur Anordnung und Kühlung des Stators 1 und ein Rotorraum 26 zur Anordnung eines Rotors 27 der elektrischen Maschine. Die Statordichthülse 15 ist zur Abdichtung des Rotorraums 26 gegenüber dem Statorraum 25 vorgesehen. Die elektrische Maschine 2 weist zwei Lagerschilde 28 zur Lagerung des Rotors 27 auf. Am jeweiligen Lagerschild 28 ist ein Ringkragen 29 befestigt oder einstückig ausgebildet. Zwischen dem Ringkragen 27 des jeweiligen Lagerschildes 28 und dem jeweiligen Hülsen-Endabschnitt 15e der Statordichthülse 15 ist eine Hülsen-Dichtung 30 vorgesehen.

An jeder Stirnseite des Stators 1 ist ein den jeweiligen Wickelkopf der Statorwicklung 11 aufnehmender Statorkühlraum 31 ausgebildet. Die Statornuten 7 sind ausgehend von einem der beiden Statorkühlräume 31 bis in den anderen Statorkühlraum 31 entlang der Nut-Kühlpfade 14 durchströmbar.

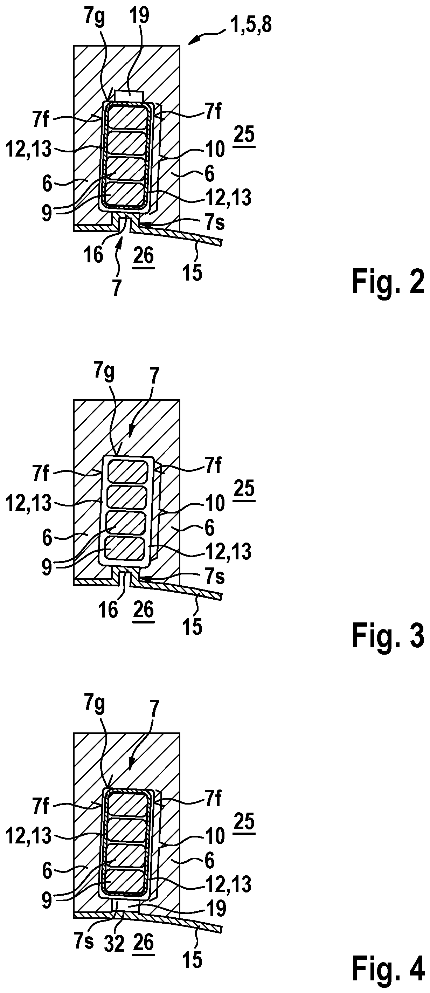

Fig.2 zeigt einen Schnitt durch eine der Statornuten des Stators entlang einer Linie A-A in Fig.1.

Die Nutschlitz-Versperrungen 16 der Statordichthülse 15 sind erfindungsgemäß sickenförmig ausgebildet. Die sickenförmigen Nutschlitz-Durchlässe 17 der Statordichthülse 15 können beispielsweise als Sicken-Unterbrechung oder als Sicke mit verminderter Sickenhöhe ausgeführt sein.

Die mehreren Sicken 16 pro Nutschlitz 7s sind im Gegensatz zu den Versteifungsrippen aus dem Stand der Technik jeweils in axialer Richtung kürzer ausgebildet als eine Paketlänge des Statorblechpakets 5.

Der Schnitt durch die Statornut 7 des Stators 1 entlang der Linie A-A ist ein Schnitt durch eine der Stützstellen 18. Der Bypass 19 zur Umgehung der Stützstelle 18 ist im Schnitt nach Fig.2 am Nutgrund 7g als Ausnehmung in der jeweiligen Blechlamelle 8 vorgesehen. Der am Nutgrund 7g liegende Bypass 19 kann beispielsweise im Nutgrund 7g oder in den Zahnflanken 7f am Fuße der Statorzähne 6 ausgebildet sein. Im Nutschlitz 7s des Schnittes nach Fig.2 ist eine sickenförmige Nutschlitz-Versperrung 16 vorgesehen. Stützstellen 18 mit einer Nutschlitz-Versperrung 16 haben also einen Bypass 19 im Nutgrund 7g.

Fig.3 zeigt einen Schnitt durch eine der Statornuten des Stators entlang einer Linie B-B in Fig.1.

Der Schnitt durch die Statornut 7 des Stators 1 entlang der Linie B-B liegt in axialer Richtung zwischen zwei Stützstellen 18. Daher ist sowohl am Nutgrund 7g als auch im Nutschlitz 7s kein Bypass 19 vorgesehen. Somit weist die Statordichthülse 15 im Schnitt nach Fig.3 eine sickenförmige Nutschlitz-Versperrung 16 auf.

Fig.4 zeigt einen Schnitt durch eine der Statornuten des Stators entlang einer Linie C-C in Fig.1.

Der Schnitt durch die Statornut 7 des Stators 1 entlang der Linie C-C ist ein Schnitt durch eine andere der Stützstellen 18. Der Bypass 19 zur Umgehung der Stützstelle 18 ist im Schnitt nach Fig.4 im Nutschlitz 7s vorgesehen, so dass die Statordichthülse 15 an dieser axialen Position einen Nutschlitz-Durchlass 17 aufweist. Am Nutgrund 7f ist kein Bypass 19 vorgesehen.

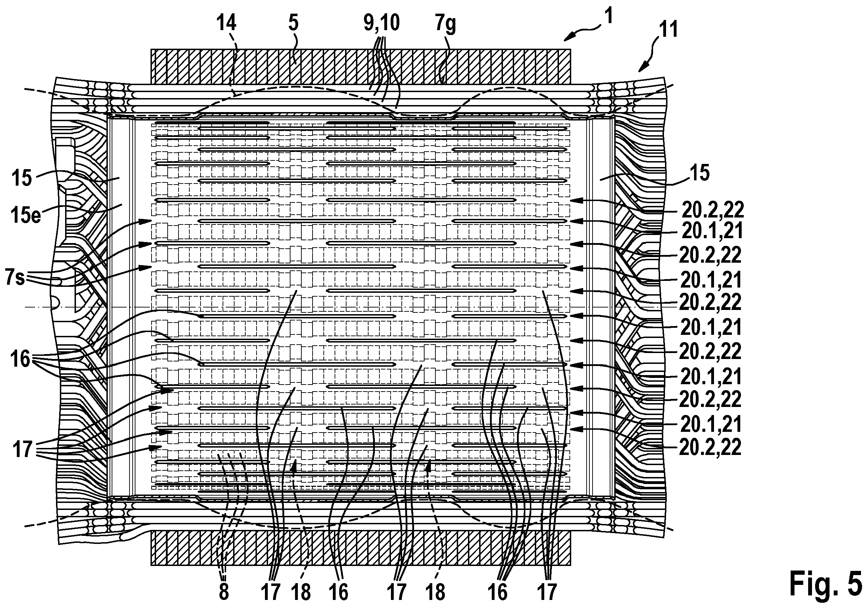

Fig.5 zeigt eine Schnittansicht auf einen Innenumfang des Stators nach Fig.1 mit der am Innenumfang anliegenden erfindungsgemäßen Statordichthülse.

Die Statordichthülse 15 weist pro Nutschlitz 7s ein Versperrungs-Muster 20 umfassend zumindest eine Nutschlitz-Versperrung 16 und zumindest einen Nutschlitz-Durchlass 17 auf. Für einen ersten Satz 21 von Nutschlitzen 7s des Statorblechpakets 5 ist ein erstes Versperrungs-Muster 20.1 und für einen zweiten Satz 22 von Nutschlitzen 7s ein zweites Versperrungs-Muster 20.2 vorgesehen, wobei das zweite Versperrungs-Muster 20.2 an axialen Positionen, an denen das erste Versperrungs-Muster 20.1 einen Nutschlitz-Durchlass 17 aufweist, eine Nutschlitz-Versperrung 16 hat. Die Nutschlitz-Versperrungen 16 von beiden Versperrungs-Mustern 20.1,20.2 können in axialer Richtung gesehen beispielsweise überlappen. Der erste Satz 21 von Nutschlitzen 7s und der zweite Satz 22 von Nutschlitzen 7s umfassen eine gleiche Anzahl von Nutschlitzen 7s.

Die Statordichthülse 15 ist erfindungsgemäß durch Umformen, insbesondere Warmumformen, hergestellt und dadurch mit dem Statorblechpaket 5 fest verbunden, beispielsweise zerstörungsfrei unlösbar verbunden, insbesondere indem Material der Statordichthülse 15 nach Fig.4 in die Nutschlitze 7s hinein verdrängt ist. Dabei entstehen in den Nutschlitzen 7s rippenförmige Wandstärkenverdickungen 32.

Die Statordichthülse 15 ist beispielsweise aus einem Werkstoff hergestellt, der einen Thermoplast umfasst, insbesondere einen thermoplastischen Verbundwerkstoff, speziell insbesondere einen faserverstärkten Verbundwerkstoff.

Die Statordichthülse 15 wird aus einem umzuformenden Rohling hergestellt, der nach einer beispielhaften ersten Variante ein Glattrohr sein kann, das mit Fügeluft an das Statorblechpaket 5 montiert und nachträglich aufgeweitet ist. Das Glattrohr kann beispielsweise ein extrudiertes Rohr bzw. eine extrudierte Hülse sein. Der Rohling kann nach einer beispielhaften zweiten Variante ein Flachmaterialstreifen sein, der zur Erreichung der Hülsenform an luftspaltzugewandte Umfangsseiten der Statorzähne 6 angeformt ist, insbesondere mit Überlappung der beiden Enden des Flachmaterialstreifens, und der im Bereich der Nutschlitze 7s in die Nutschlitze 7s des Statorblechpakets 5 hinein geformt ist, insbesondere durch Rollieren. Der Flachmaterialstreifen kann beispielsweise ein sogenanntes Organoblech sein.

Zur Ausbildung der Statordichthülse 15 an dem Stator 1 sind die folgenden Schritte vorgesehen:
In einem ersten Schritt wird ein fertiger Stator umfassend ein Statorblechpaket 5 und eine im Statorblechpaket 5 angeordnete Statorwicklung 11 bereitgestellt.

In einem nachfolgenden zweiten Schritt wird der Rohling zur Erzeugung der Statordichthülse 15 entlang von luftspaltzugewandten Umfangsseiten der Statorzähne 6 des Statorblechpakets 5 angeordnet.

In einem weiteren dritten Schritt wird der Rohling umgeformt, insbesondere warmumgeformt, beispielsweise durch Rollieren eines Flachmaterialstreifens oder Aufweiten eines Glattrohres. Das Umformen erfolgt mittels zumindest eines Umformwerkzeuges derart, dass sich der Rohling an die luftspaltzugewandten Umfangsseiten der Statorzähne 6 anlegt, insbesondere derart, dass Material des Rohlings nach Fig.4 in die Nutschlitze 7s hinein verdrängt wird. Dabei entstehen in den Nutschlitzen 7s rippenförmige Wandstärkenverdickungen 32. Außerdem erfolgt das Erzeugen von Sicken in der Statordichthülse 15 zur Bildung der Nutschlitz-Versperrungen 16, wobei die Sicken in einem separaten Schritt oder bereits beim zuvor beschriebenen Umformen des Rohlings erzeugt werden können. Bei dem Sicken werden am Umfang der Statordichthülse 15 Einbuchtungen erzeugt, wie in Fig.2 und Fig.3 ersichtlich.

Zum Warmumformen kann das Umformwerkzeug und/oder der Rohling vor dem Umformen aufgeheizt werden.

## Patentansprüche

1. Stator (1) für eine elektrische Maschine (2) mit einer Statorachse (3) und mit einem Statorblechpaket (5), an dem Statorzähne (6) und zwischen den Statorzähnen (6) liegende Statornuten (7) ausgebildet sind und das eine Vielzahl von Blechlamellen (8) umfasst, wobei in den Statornuten (7) jeweils ein einziger Leiter (9) oder ein mehrere Leiter (9) umfassendes Leiterbündel (10), insbesondere ein Stapel von Flachdrahtleitern, zur Bildung einer elektrischen Statorwicklung (11) vorgesehen ist, wobei sich die Statornuten (7) in radialer Richtung bezüglich der Statorachse (3) jeweils zwischen einem Nutgrund (7g) und einem Nutschlitz (7s) erstrecken, wobei die Nutschlitze (7s) der Statornuten (7) durch einen als Statordichthülse (15) ausgebildeten Nutverschluss verschlossen sind, wobei die Statordichthülse (15) auf einer dem Statorblechpaket (5) zugewandten Außenseite Radialvorsprünge (16) aufweist, die in radialer Richtung in die Nutschlitze (7s) hineinreichen und sich in axialer Richtung erstrecken,
**dadurch gekennzeichnet, dass**
- zwischen Flanken (7f) der jeweiligen Statornut (7) und dem in der Statornut (7) angeordneten Leiter (9) bzw. Leiterbündel (10) Nutspalte (12) gebildet sind, die in der jeweiligen Statornut (7) einen sich in axialer Richtung bezüglich der Statorachse (3) erstreckenden Nutspaltkanal (13) bilden, der entlang eines Nut-Kühlpfads (14) von einem Kühlmedium, insbesondere Öl, durchströmbar ist,
- die Radialvorsprünge (16) der Statordichthülse (15) Nutschlitz-Versperrungen sind, die den jeweiligen Nutschlitz (7s) abschnittsweise für den Nut-Kühlpfad (14) versperren oder verengen,
- an der Statordichthülse (15) pro Nutschlitz (7s) des Stators (1) mehrere in axialer Richtung voneinander beabstandete Nutschlitz-Versperrungen (16) ausgebildet sind, die insbesondere bis an den Leiter (9) bzw. das Leiterbündel (10) reichen,
- zwischen benachbarten der Nutschlitz-Versperrungen (16) desselben Nutschlitzes (7s) jeweils ein Nutschlitz-Durchlass (17) für eine Umlenkung des Nut-Kühlpfades (14) gebildet ist,
- die Nutschlitz-Versperrungen (16) der Statordichthülse (15) sickenförmig ausgebildet sind.

2. Stator nach Anspruch 1, **dadurch gekennzeichnet, dass** die Nutschlitz-Durchlässe (17) der Statordichthülse (15) als Sicken-Unterbrechung oder als Sicke mit verminderter Sickenhöhe ausgebildet sind.

3. Stator nach einem der vorhergehenden Ansprüche, **dadurch gekennzeichnet, dass** die Statordichthülse (15) pro Nutschlitz (7s) ein Versperrungs-Muster (20) umfassend zumindest eine Nutschlitz-Versperrung (16) und zumindest einen Nutschlitz-Durchlass (17) aufweist, wobei für einen ersten Satz (21) von Nutschlitzen (7s) ein erstes Versperrungs-Muster (20.1) und für einen zweiten Satz (22) von Nutschlitzen (7s) ein zweites Versperrungs-Muster (20.2) vorgesehen ist, wobei das zweite Versperrungs-Muster (20.2) an axialen Positionen, an denen das erste Versperrungs-Muster (20.1) einen Nutschlitz-Durchlass (17) aufweist, eine Nutschlitz-Versperrung (16) hat, wobei die Nutschlitz-Versperrungen (16) von beiden Versperrungs-Mustern (20.1,20.2) in axialer Richtung gesehen insbesondere überlappen.

4. Stator nach einem der vorhergehenden Ansprüche, **dadurch gekennzeichnet, dass** in den Statornuten (7) jeweils mehrere, in axialer Richtung bezüglich der Statorachse (3) voneinander beabstandete Stützstellen (18) zur Abstützung des in der jeweiligen Statornut (7) liegenden Leiters (9) bzw. Leiterbündels (10) gebildet sind, wobei der jeweilige Nut-Kühlpfad (14) an den Stützstellen (18) zumindest verengt ist, wobei an den Stützstellen (18) jeweils ein Bypass (19) vorgesehen ist, um das Kühlmedium an der jeweiligen verengten Stützstelle (18) vorbeizuleiten, wobei die Bypässe (19) der jeweiligen Statornut (7) zur Bildung eines mäanderförmigen Nut-Kühlpfads (14) entlang der axialen Erstreckung der jeweiligen Statornut (7) abwechselnd am Nutgrund (7g) oder im Nutschlitz (7s) ausgebildet sind, wobei der Bypass (19) im Nutschlitz (7s) als Nutschlitz-Durchlass (17) an der Statordichthülse (15) vorgesehen ist.

5. Stator nach Anspruch 4, **dadurch gekennzeichnet, dass** die Stützstellen (18) gebildet sind durch Verdrehen von jeweils zumindest zwei Blechlamellen (8) des Statorblechpakets (5) um einen bestimmten Verdrehwinkel um die Statorachse (3).

6. Stator nach einem der vorhergehenden Ansprüche, **dadurch gekennzeichnet, dass** die Statordichthülse (15) durch Umformen, insbesondere Warmumformen, fest mit dem Stator (1) verbunden ist, insbesondere indem Material der Statordichthülse (15) in die Nutschlitze (7s) hinein verdrängt ist.

7. Stator nach einem der vorhergehenden Ansprüche, **dadurch gekennzeichnet, dass** die Statordichthülse (15) aus einem Werkstoff hergestellt ist, der einen Thermoplast umfasst, insbesondere einen thermoplastischen Verbundwerkstoff, speziell insbesondere einen faserverstärkten Verbundwerkstoff.

8. Stator nach einem der vorhergehenden Ansprüche, **dadurch gekennzeichnet, dass** die Statordichthülse (15) aus einem umzuformenden Rohling hergestellt ist, wobei der Rohling
a. ein Glattrohr, insbesondere eine extrudierte Hülse, ist, das mit Fügeluft an das Statorblechpaket (5) montiert und nachträglich aufgeweitet ist,
b. ein Flachmaterialstreifen ist, insbesondere aus einem Organoblech, der zur Erreichung der Hülsenform an luftspaltzugewandte Umfangsseiten der Statorzähne (6) angeformt ist, insbesondere mit Überlappung der beiden Enden des Flachmaterialstreifens, und im Bereich der Nutschlitze (7s) in die Nutschlitze (7s) des Statorblechpakets (5) hinein geformt ist, insbesondere durch Rollieren.

9. Verfahren zur Ausbildung einer Statordichthülse (15) an einem Stator (1) nach einem der Ansprüche 1-8 umfassend die Schritte:
a. Bereitstellen eines fertigen Stators (1) umfassend ein Statorblechpaket (5) und eine Statorwicklung (11),
b. Anordnen eines Rohlings zur Erzeugung einer Statordichthülse (15) entlang von luftspaltzugewandten Umfangsseiten der Statorzähne (6) des Statorblechpakets (5),
c. Erzeugen der Statordichthülse (15) durch Umformen, insbesondere Warmumformen, des Rohlings, insbesondere durch Rollieren oder Aufweiten, mittels zumindest eines Umformwerkzeuges derart, dass sich der Rohling an die luftspaltzugewandten Umfangsseiten der Statorzähne (6) anlegt, insbesondere derart, dass Material des Rohlings in die Nutschlitze (7s) hinein verdrängt wird,
d. Erzeugen von Sicken in der Statordichthülse (15) zur Bildung der Nutschlitz-Versperrungen (16).

10. Elektrische Maschine mit einem Stator nach einem der Ansprüche 1 bis 8.

## Claims

1. Stator (1) for an electric machine (2) having a stator axis (3) and having a laminated stator core (5) on which stator teeth (6) and stator slots (7) situated between the stator teeth (6) are formed and which comprises a plurality of laminations (8), wherein a single conductor (9) or a conductor bundle (10) comprising a plurality of conductors (9), in particular a stack of flat wire conductors, for forming an electrical stator winding (11) is provided in each of the stator slots (7), wherein the stator slots (7) each extend between a slot base (7g) and a slot opening (7s) in the radial direction with respect to the stator axis (3), wherein the slot openings (7s) of the stator slots (7) are closed by a slot closure in the form of a stator sealing sleeve (15), wherein the stator sealing sleeve (15) has radial projections (16) on an outer side facing the laminated stator core (5), the radial projections reaching into the slot openings (7s) in the radial direction and extending in the axial direction,
**characterized in that**
- slot gaps (12) are formed between flanks (7f) of the respective stator slot (7) and the conductor (9) or conductor bundle (10) arranged in the stator slot (7) and form a slot gap channel (13) which extends in the axial direction with respect to the stator axis (3) in the respective stator slot (7) and through which a cooling medium, in particular oil, can flow along a slot cooling path (14),
- the radial projections (16) of the stator sealing sleeve (15) are slot opening blockers which block or constrict the respective slot opening (7s) in sections for the slot cooling path (14),
- a plurality of slot opening blockers (16) which are spaced apart from each other in the axial direction are formed on the stator sealing sleeve (15) for each slot opening (7s) of the stator (1) and reach in particular as far as the conductor (9) or the conductor bundle (10),
- a respective slot opening passage (17) for deflecting the slot cooling path (14) is formed between adjacent slot opening blockers (16) of the same slot opening (7s),
- the slot opening blockers (16) of the stator sealing sleeve (15) are of bead-like design.

2. Stator according to Claim 1, **characterized in that** the slot opening passages (17) of the stator sealing sleeve (15) are in the form of a bead interruption or in the form a bead of reduced bead height.

3. Stator according to either of the preceding claims, **characterized in that** the stator sealing sleeve (15) has, for each slot (7s), a blocking pattern (20) comprising at least one slot opening blocker (16) and at least one slot opening passage (17), wherein a first blocking pattern (20.1) is provided for a first set (21) of slot openings (7s) and a second blocking pattern (20.2) is provided for a second set (22) of slot openings (7s), wherein the second blocking pattern (20.2) has a slot opening blocker (16) in axial positions in which the first blocking pattern (20.1) has a slot opening passage (17), wherein the slot opening blockers (16) of both blocking patterns (20.1, 20.2) in particular overlap as seen in the axial direction.

4. Stator according to any of the preceding claims, **characterized in that** a plurality of support points (18), which are spaced apart from each other in the axial direction with respect to the stator axis (3), for supporting the conductor (9) or conductor bundle (10) situated in the respective stator slot (7) are formed in each of the stator slots (7), wherein the respective slot cooling path (14) is at least constricted at the support points (18), wherein a bypass (19) is provided at each of the support points (18) in order to conduct the cooling medium past the respective constricted support point (18), wherein the bypasses (19) of the respective stator slot (7) are designed for forming a meandering slot cooling path (14) along the axial extent of the respective stator slot (7) alternately at the slot base (7g) or in the slot opening (7s), wherein the bypass (19) in the slot opening (7s) is provided as a slot opening passage (17) on the stator sealing sleeve (15).

5. Stator according to Claim 4, **characterized in that** the support points (18) are formed by turning in each case at least two laminations (8) of the laminated stator core (5) through a certain angle of rotation around the stator axis (3).

6. Stator according to any of the preceding claims, **characterized in that** the stator sealing sleeve (15) is fixedly connected to the stator (1) by forming, in particular hot forming, in particular by way of material of the stator sealing sleeve (15) being displaced into the slot openings (7s).

7. Stator according to any of the preceding claims, **characterized in that** the stator sealing sleeve (15) is produced from a material which comprises a thermoplastic, in particular a thermoplastic composite material, especially in particular a fibre-reinforced composite material.

8. Stator according to any of the preceding claims, **characterized in that** the stator sealing sleeve (15) is made of a blank to be formed, wherein the blank
a. is a smooth tube, in particular an extruded sleeve, which is mounted on the laminated stator core (5) with a joining gap and subsequently expanded,
b. is a flat material strip, in particular made of an organic metal sheet, which in order to achieve the sleeve shape is integrally formed on circumferential sides, which face the air gap, of the stator teeth (6), in particular with the two ends of the flat material strip overlapping, and is formed into the slot openings (7s) of the laminated stator core (5) in the region of the slot openings (7s), in particular by rolling.

9. Method for forming a stator sealing sleeve (15) on a stator (1) according to any of Claims 1-8, comprising the steps of:
a. providing a finished stator (1) comprising a laminated stator core (5) and a stator winding (11),
b. arranging a blank for producing a stator sealing sleeve (15) along circumferential sides, which face the air gap, of the stator teeth (6) of the laminated stator core (5),
c. producing the stator sealing sleeve (15) by forming, in particular hot forming, the blank, in particular by rolling or expansion, by means of at least one forming tool in such a way that the blank bears against the circumferential sides, which face the air gap, of the stator teeth (6), in particular in such a way that material of the blank is displaced into the slot openings (7s),
d. producing beads in the stator sealing sleeve (15) in order to form the slot opening blockers (16).

10. Electric machine with a stator according to any of Claims 1 to 8.

## Revendications

1. Stator (1) pour une machine électrique (2), comprenant un axe de stator (3) et un empilage de tôles de stator (5) sur lequel des dents de stator (6) et des encoches statoriques (7) situées entre les dents de stator (6) sont réalisées et qui comprend une pluralité de lamelles de tôle (8), dans lequel, dans les encoches statoriques (7), respectivement un seul conducteur (9) ou un faisceau de conducteurs (10) comprenant plusieurs conducteurs (9), en particulier un empilement de conducteurs de fil plat, est prévu pour former un enroulement statorique (11) électrique, dans lequel les encoches statoriques (7) s'étendent dans la direction radiale par rapport à l'axe de stator (3) respectivement entre un fond d'encoche (7g) et une fente d'encoche (7s), dans lequel les fentes d'encoche (7s) des encoches statoriques (7) sont fermées par une cale d'encoche réalisée sous forme de manchon d'étanchéité statorique (15), dans lequel le manchon d'étanchéité statorique (15) présente des saillies radiales (16) sur une face extérieure tournée vers l'empilage de tôles de stator (5) qui dépassent dans la direction radiale dans les fentes d'encoche (7s) et s'étendent dans la direction axiale,
**caractérisé en ce que**
- entre les flancs (7f) de l'encoche statorique (7) respective et le conducteur (9) ou le faisceau de conducteurs (10) disposé dans l'encoche statorique (7), des écartements d'encoche (12) sont formés qui forment dans l'encoche statorique (7) respective un canal d'écartement d'encoche (13) s'étendant dans la direction axiale par rapport à l'axe de stator (3), par lequel un agent réfrigérant, en particulier de l'huile, peut s'écouler le long d'un trajet de refroidissement d'encoche (14),
- les saillies radiales (16) du manchon d'étanchéité statorique (15) sont des blocages de fente d'encoche qui bloquent ou rétrécissent la fente d'encoche (7s) respective par endroits pour le trajet de refroidissement d'encoche (14),
- au niveau du manchon d'étanchéité statorique (15), pour chaque fente d'encoche (7s) du stator (1), plusieurs blocages de fente d'encoche (16), espacés les uns des autres dans la direction axiale, sont réalisés qui atteignent en particulier le conducteur (9) ou le faisceau de conducteurs (10),
- entre des blocages de fente d'encoche (16) voisins de la même fente d'encoche (7s), respectivement un passage de fente d'encoche (17) est formé pour une déviation du trajet de refroidissement d'encoche (14),
- les blocages de fente d'encoche (16) du manchon d'étanchéité statorique (15) sont réalisés en forme de moulures.

2. Stator selon la revendication 1, **caractérisé en ce que** les passages de fente d'encoche (17) du manchon d'étanchéité statorique (15) sont réalisés comme une discontinuité de moulure ou comme une moulure d'une hauteur de moulure diminuée.

3. Stator selon l'une quelconque des revendications précédentes, **caractérisé en ce que** le manchon d'étanchéité statorique (15) présente pour chaque fente d'encoche (7s) un motif de blocage (20) comprenant au moins un blocage de fente d'encoche (16) et au moins un passage de fente d'encoche (17), dans lequel, pour un premier jeu (21) de fentes d'encoche (7s), un premier motif de blocage (20.1) est prévu, et pour un deuxième jeu (22) de fentes d'encoche (7s), un deuxième motif de blocage (20.2) est prévu, dans lequel le deuxième motif de blocage (20.2) présente un blocage de fente d'encoche (16) dans des positions axiales où le premier motif de blocage (20.1) présente un passage de fente d'encoche (17), dans lequel les blocages de fente d'encoche (16) des deux motifs de blocage (20.1, 20.2) se chevauchent en particulier, vu dans la direction axiale.

4. Stator selon l'une quelconque des revendications précédentes, **caractérisé en ce que** dans les encoches statoriques (7), respectivement plusieurs points d'appui (18), espacés les uns des autres dans la direction axiale par rapport à l'axe de stator (3), sont formés pour soutenir le conducteur (9) ou le faisceau de conducteurs (10) situé dans l'encoche statorique (7) respective, dans lequel le trajet de refroidissement d'encoche (14) respectif est au moins rétréci au niveau des points d'appui (18), dans lequel, au niveau des points d'appui (18), respectivement une dérivation (19) est prévue pour faire passer l'agent réfrigérant devant le point d'appui (18) rétréci respectif, dans lequel les dérivations (19) de l'encoche statorique (7) respective sont formées en alternance sur le fond d'encoche (7g) ou dans la fente d'encoche (7s) pour former un trajet de refroidissement d'encoche (14) en forme de méandre le long de l'extension axiale de l'encoche statorique (7) respective, dans lequel la dérivation (19) est prévue dans la fente d'encoche (7s) sous la forme d'un passage de fente d'encoche (17) au niveau du manchon d'étanchéité statorique (15).

5. Stator selon la revendication 4, **caractérisé en ce que** les points d'appui (18) sont formés par une rotation de respectivement au moins deux lamelles de tôle (8) de l'empilage de tôles de stator (5) d'un angle de rotation déterminé autour de l'axe de stator (3).

6. Stator selon l'une quelconque des revendications précédentes, **caractérisé en ce que** le manchon d'étanchéité statorique (15) est solidaire du stator (1) par formage, en particulier formage à chaud, en particulier **en ce que** le matériau du manchon d'étanchéité statorique (15) est refoulé dans les fentes d'encoche (7s).

7. Stator selon l'une quelconque des revendications précédentes, **caractérisé en ce que** le manchon d'étanchéité statorique (15) est fabriqué à partir d'un matériau qui comprend un thermoplastique, en particulier un matériau composite thermoplastique, spécifiquement en particulier un matériau composite renforcé par des fibres.

8. Stator selon l'une quelconque des revendications précédentes, **caractérisé en ce que** le manchon d'étanchéité statorique (15) est fabriqué à partir d'une ébauche à former, dans lequel l'ébauche
a) est un tube lisse, en particulier un manchon extrudé qui est monté sur l'empilage de tôles de stator (5) avec du jeu d'assemblage et est élargi a posteriori,
b) est une bande de matériau plat, en particulier en tôle organique, qui est rapportée aux faces circonférentielles tournées vers l'entrefer des dents de stator (6) pour obtenir la forme de manchon, en particulier avec chevauchement des deux extrémités de la bande de matériau plat, et est formée à l'intérieur des fentes d'encoche (7s) de l'empilage de tôles de stator (5) au niveau des fentes d'encoche (7s), en particulier par roulage.

9. Procédé permettant de réaliser un manchon d'étanchéité statorique (15) sur un stator (1) selon l'une quelconque des revendications 1 à 8, comprenant les étapes consistant à :
a) fournir un stator fini (1) comprenant un empilage de tôles de stator (5) et un enroulement de stator (11),
b) disposer une ébauche pour produire un manchon d'étanchéité statorique (15) le long des faces circonférentielles tournées vers l'entrefer des dents de stator (6) de l'empilage de tôles de stator (5),
c) produire le manchon d'étanchéité statorique (15) par formage, en particulier formage à chaud, de l'ébauche, en particulier par roulage ou élargissement, au moyen d'au moins un outil de formage de sorte que l'ébauche s'applique contre les faces circonférentielles tournées vers l'entrefer des dents de stator (6), en particulier de sorte que le matériau de l'ébauche est refoulé dans les fentes d'encoche (7s),
d) produire des moulures dans le manchon d'étanchéité statorique (15) pour former les blocages de fente d'encoche (16).

10. Machine électrique, comprenant un stator selon l'une quelconque des revendications 1 à 8.
